# EUROPÄISCHE PATENTSCHRIFT

(11) **EP 1 400 002 B1**
(45) Veröffentlichungstag und Bekanntmachung des Hinweises auf die Patenterteilung: **29.03.2006**
(21) Anmeldenummer: 02754634.0
(22) Anmeldetag: 06.06.2002
(51) Int. Cl.: H02K 9/19

(54) **ELEKTROMOTOR MIT KÜHLSCHLANGE**
ELECTRIC MOTOR COMPRISING A COILED COOLING PIPE
MOTEUR ELECTRIQUE A SERPENTIN DE REFRIGERATION

(30) Priorität: 28.06.2001 DE 10131119
(43) Veröffentlichungstag der Anmeldung: 24.03.2004
(73) Patentinhaber: SIEMENS AKTIENGESELLSCHAFT, 80333 München (DE)
(72) Erfinder: HOPPE, Thomas, 85247 Schwabhausen/Stetten (DE)
(86) Internationale Anmeldenummer: PCT/EP2002/006222
(87) Internationale Veröffentlichungsnummer: WO 2003/015242

(56) Entgegenhaltungen:
- EP-A- 0 589 187
- EP-A- 0 924 839
- DE-A- 19 604 643
- US-A- 3 636 186

## Beschreibung

Die Erfindung bezieht sich auf einen Elektromotor mit zumindest einem Motorteil, der zur Abfuhr von Abwärme mindestens eine Kühlschlange aufweist.

Insbesondere im Primärteil eines Linearmotors, der auf einem Körper Spulen trägt, wird ein Teil der eingespeisten elektrischen Energie in Wärme umgewandelt, die nach außen abgeführt werden muss. Zu diesem Zweck ist in der Regel auf der den Spulen abgewandten Seite des Körpers eine Kühlschlange angebracht, durch die ein Kühlmedium wie Wasser geleitet wird.

Zur Herstellung der Kühlschlange wird ein Rohr aus gut wärmeleitendem Material wie Kupfer, Aluminium od. dgl. zick-zack- oder mäanderförmig in ein flächiges Gebilde gebogen und auf der entsprechenden Fläche des Trägerkörpers befestigt. Dabei ist das Biegen des Materials technisch aufwendig, da leicht Stauchungen an den Biegungsinnenseiten und/oder Risse an den Biegungsaußenseiten entstehen können. Des weiteren ist zu berücksichtigen, dass für verschiedene Typen von Linearmotoren, die sich hinsichtlich der Dimensionen unterscheiden, unterschiedliche Kühlschlangen bereit gehalten werden müssen, was den Aufwand für die Fertigung und Lagerhaltung erhöht.

Dieses Problem ergibt sich auch bei Rotationsmotoren, wobei in diesem Fall die Kühlschlange in Form eines Zylindermantels gebogen werden muss.

DE-A-196 04 643 beschreibt einen Motorteil gemäß dem Oberbegriff des Patentanspruchs 1, wobei die Kühlschlange als einstückiges Bauteil ausgebildet ist, das in Nuten in der Rückenfläche eines Primär- oder Sekundärteils eines Linearmotors eingesetzt ist.

Aus der EP-A-0 924 839 ist ein Elektromotor mit axial in einem Gehäuse verlaufenden Kühlmittelkanälen und Umlenklaschen aus Kunststoff bekannt, die in einem stirnseitigen Gehäuseteil angeordnet sind.

Die US-A-3,636,186 beschreibt einstückige U-förmige Umlenkungen für eine Kühlschlange.

Aus der EP-A-0 589 187 ist eine oberflächengekühlte elektrische Maschine bekannt, bei der jeweils mehrere axial verlaufende Kühlkanäle über Umlenkkanäle in Gehäusestirnseiten verbunden sind.

Demgegenüber liegt die Aufgabe zugrunde, einen Motorteil für einen Elektromotor mit Kühlschlange zu schaffen, bei dem die Kühlschlange in einfacher Weise herstellbar und an unterschiedliche Dimensionen des Motors anpassbar ist.

Die Lösung dieser Aufgabe erfolgt durch einen Motorteil gemäß den Merkmalen des Patentanspruchs 1; die abhängigen Ansprüche betreffen vorteilhafte Ausgestaltungen der Erfindung.

Erfindungsgemäß wird vorgeschlagen, dass bei der im Oberbegriff des Anspruchs 1 angegebenen Vorrichtung die Umlenkungen aus zwei Knien aus Kunststoff aufgebaut sind.

Zwar sind Kunststoffmaterialien in der Regel schlechte Wärmeleiter, andererseits geht die Erfindung von der Erkenntnis aus, dass bei mäanderförmigen Kühlschlangen die Biegungen bzw. Umlenkungen normalerweise in Randbereichen des Körpers angeordnet sind, aus denen keine oder nur wenig Wärme abzuführen ist. Dementsprechend beeinträchtigen Umlenkungen aus Kunststoffmaterial die Kühlleistung der Kühlschlange nicht oder nur unwesentlich, da in den kritischen Bereichen, in denen viel Wärme abzuführen ist, Kühlrohre aus gut wärmeleitendem Material angeordnet sind.

Kühlschlangen mit gewünschten Dimensionen können modular beispielsweise dadurch hergestellt werden, dass Kühlrohre mit einer Standardlänge entsprechend abgelängt und in geeigneter Anzahl gemäß einer gewünschten Dimension über die Umlenkungen aneinander gereiht werden.

Vorzugsweise werden die Umlenkungen als Kunststoff-Formteile beispielsweise aus Duroplasten oder Thermoplasten mittels Spritzgießen od. dgl. hergestellt.

Diese Umlenkungen weisen vorzugsweise einen Aufnahmeabschnitt für ein Ende eines Kühlrohres oder einen Einsteckabschnitt zum Einbringen in ein Ende eines Kühlrohres auf. Der Aufnahmeabschnitt bzw. der Einsteckabschnitt kann mit Dichtungselementen wie Ö-Ringen od. dgl. versehen sein.

Eine einfache Gestaltung ergibt sich, wenn beispielsweise 180°-Umlenkungen aus zwei Knien zu jeweils 90° ausgebildet sind. Um einen variablen Abstand zwischen den Anschlussenden zu erzielen, sind die Umlenkungen aus zwei separaten Knien zusammengesetzt, die über einen Koppelabschnitt miteinander verbunden sind, wobei der Koppelabschnitt an einem der Knie ausgebildet sein kann oder als separates Teil, insbesondere als Rohr, vorgesehen sein kann.

Ein Ausführungsbeispiel der Erfindung wird anhand der beigefügten Zeichnungen erläutert. Es zeigen:
- Fig. 1: schematisch den Aufbau einer Kühlschlange aus Kühlrohren und Umlenkungen und
- Fig. 2: schematisch den Aufbau eines Motorteils mit Kühlschlange.

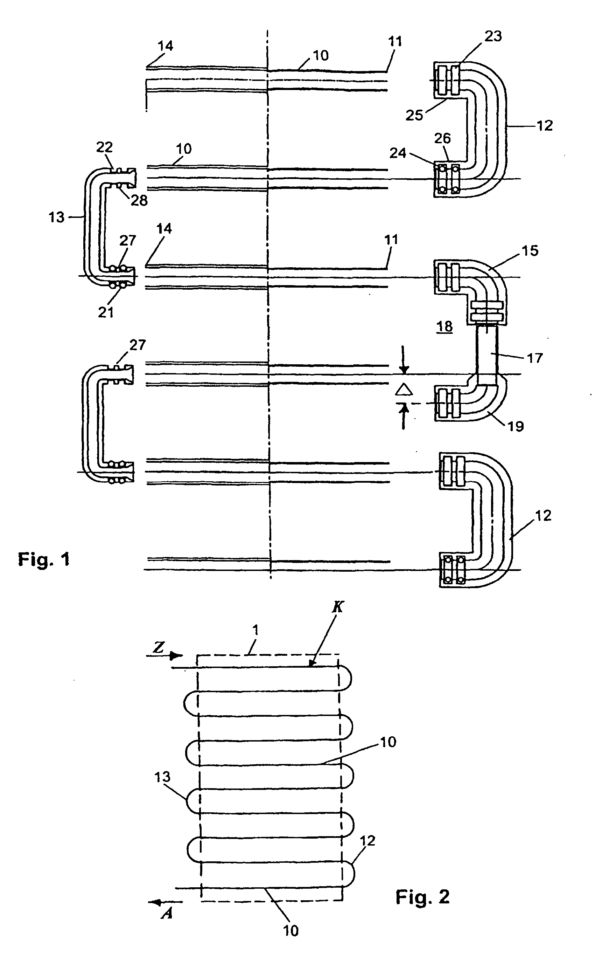

In Figur 2 in Draufsicht, gestrichelt dargestellt, ist der Körper 1 eines Motorteils eines Linearmotors. Dies ist beispielsweise der Primärteil, der auf einer Seite des Körpers 1 Zähne und Spulen aufweist, in denen Wärme entwickelt wird. Andererseits kann dies auch die Trägerplatte eines Sekundärteils sein, die Permanentmagnete trägt (Synchronmotor) oder der Sekundärteil eines Asynchronmotors, in dem Wirbelströme erzeugt werden.

Auf der den elektrisch wirksamen Bauelementen (Spulen, Permanentmagnete, Induktionselemente) abgewandten Seite des Körpers 1 ist eine Kühlschlange K aus Rohrmaterial angebracht, die aus geraden Abschnitten 10 und Umlenkungen 12, 13 als flächenartiges, mäanderförmiges Element aufgebaut ist. Kühlmittel, das über einen Zulauf Z zugeführt wird, passiert die Kühlschlange K, nimmt dabei vom Körper 1 Abwärme auf und verlässt die Kühlschlange bei einem Ablauf A. Anders als in Figur 2 dargestellt, ist dabei in der Regel der Ablauf A über eine Rohrleitung bis in den Bereich des Zulaufs Z geführt.

Wie aus Figur 1 ersichtlich ist, ist erfindungsgemäß die Kühlschlange aus mehreren geraden Rohrabschnitten 10 aufgebaut, die über Umlenkungen miteinander verbunden sind, wobei in dieser Figur drei verschiedene Typen von Umlenkungen 12, 13, 18 dargestellt sind. Dabei ist nicht erfindungsgemäß, dass die Umlenkungen 12 und 13 aus einem Stück bestehen.

Die Umlenkung 12 besteht aus einem ersten 90°-Knie mit einem ersten Aufnahmeabschnitt 25, einem daran anschließenden geraden Teilabschnitt und einem zweiten 90°-Knie mit einem zweiten Aufnahmeabschnitt 26. In den Aufnahmeabschnitten sind beispielsweise Ringnuten 23 zur Aufnahme von O-Ringen 24 ausgebildet.

Zur Montage der Kühlschlange werden Standardrohre auf entsprechende Längen zu Kühlrohren 10 abgelängt, deren Enden 11 in die Aufnahmeabschnitte 25, 26 eingebracht und so miteinander verbunden werden. Dementsprechend ist der Innendurchmesser der Umlenkung 12 an den Außendurchmesser des Kühlrohres 10 angepasst ausgewählt.

Bei der mit 13 bezeichneten Umlenkung der Figur 2 sind anstatt von zwei Aufnahmeabschhitten jeweils zwei Einsteckabschnitte 27, 28 vorgesehen, die jeweils mit Ringnuten 22 versehen sind und die einen Außendurchmesser entsprechend dem Innendurchmesser des Kühlrohres 10 aufweisen. In die Ringnuten 22 sind ebenfalls O-Ringe 21 eingebracht, die beim Zusammenstecken einen dichten Abschluss gewährleisten.

Die mit 18 in Figur 2 bezeichnete Umlenkung ist aus einem ersten Knie 15 mit zwei Aufnahmeabschnitten und einem zweiten Knie 19 ausgebildet. Das zweite Knie 19 weist einen Aufnahmeabschnitt sowie einen Kopplungsabschnitt 17 in Form eines Rohrstücks auf, der in einen Aufnahmeabschnitt des Knies 15 eingreift.

Durch geeignete Wahl der Länge des Kopplungsabschnittes 17 können variable Abstände zwischen den Kühlrohren 10 realisiert werden, wie durch den Abstand Δ in Figur 2 dargestellt ist.

Die in Figur 2 aufgeführte Darstellung von Umlenkungen ist nicht vollständig. Beispielsweise sind Umleitungen denkbar, die einerseits einen Einsteckabschnitt, andererseits einen Aufnahmeabschnitt aufweisen. Des weiteren kann auch entsprechend der Umlenkung 18 eine Umlenkung mit einem oder zwei Einsteckabschnitten an den Enden ausgebildet sein. Des weiteren ist es nicht notwendig, dass der Kopplungsabschnitt 17 einstückig mit einem Element 19 verbunden ist. Es ist auch denkbar, zwei Knie 15 mit einem separaten Rohrelement zu einer der Umlenkung 18 entsprechenden Umlenkung auszugestalten.

Des weiteren ist es möglich, auch die Kühlrohre zu modifizieren, beispielsweise derart, dass das Ende 14 zur Aufnahme eines Einsteckabschnittes in Art einer Muffe aufgeweitet ist bzw. das Ende 11 zum Einbringen in einen Aufnahmeabschnitt entsprechend verengt ist.

Die Umlenkungen sind vorzugsweise Kunststoff-Formteile, deren Verbindung mit Metallteilen keine Schwierigkeiten zeigen. Anders als bei der Verbindung von gleichen oder unterschiedlichen Metallen mittels Schweißen, Löten etc. treten hier keine Oxidationsprobleme auf.

Um die Haftung der Umlenkungen an den Kühlrohren zu erhöhen bzw. die Dichtung zu verbessern, können die Umlenkungen mit den Kühlrohren verklebt werden; ggf. kann dabei auf O-Ringe zur Dichtung verzichtet werden.

Nachdem erfindungsgemäß die Kühlschlange K aus Kühlrohren und Umlenkungen hergestellt wurde und am Trägerkörper 1 befestigt wurde, wird der Trägerkörper mit der Kühlschlange K in an sich bekannter Weise mittels Vergussmasse vergossen. Dabei wird die Kühlschlange K endgültig am Körper 1 fixiert, wobei die Umlenkungen durch die Vergussmasse gegen Beeinträchtigungen von außen geschützt werden und die Dichtigkeit der Kühlschlange bleibend gewährleistet werden kann.

## Patentansprüche

1. Motorteil eines Elektromotors, insbesondere Primärteil, mit einem Körper (1), der für die Funktion des Motors wirksame Bauelemente, insbesondere Spulen, trägt, sowie mindestens einer Kühlschlange (K) zum Abführen von Abwärme, wobei die Kühlschlange (K) am Körper (1) befestigt ist und mäanderartig aus geraden Kühlrohren (10) und Umlenkungen (18) aufgebaut ist, **dadurch gekennzeichnet, dass** die Umlenkungen zwei separate Knie (15, 19) aus Kunststoff aufweisen.

2. Motorteil nach Anspruch 1 mit Umlenkungen (18), die mindestens einen Aufnahmeabschnitt (25, 26) für ein Ende (11) eines Kühlrohres aufweisen.

3. Motorteil nach Anspruch 1 oder 2 mit Umlenkungen, die mindestens einen Einsteckabschnitt (27, 28) zum Einbringen in ein Ende (14) eines Kühlrohres (10) aufweisen.

4. Motorteil nach Anspruch 1 bis 3, wobei die Knie (15, 19) über einen Koppelabschnitt (17) miteinander verbunden sind.

5. Motorteil nach Anspruch 4, wobei eines der Knie (19) einstückig mit einem Koppelabschnitt (17) ausgebildet ist.

6. Motorteil nach einem der Ansprüche 4 oder.5, wobei der Koppelabschnitt (17) als Rohr ausgebildet ist.

7. Motorteil nach einem der Ansprüche 1 bis 6, **dadurch gekennzeichnet, dass** die Knie als Kunststoff-Formteile ausgebildet sind.

8. Linear- oder Rotationsmotor mit einem Motorteil nach einem der vorstehenden Ansprüche.

## Claims

1. Motor part of an electric motor, in particular a primary part, with a body (1) to support components, in particular coils, which actively assist the function of the motor, and at least one cooling coil (K) for removing heat, wherein the cooling coil (K) is secured to the body (1) and is structured in a meandering manner from straight cooling pipes (10) and deflections (18), **characterised in that** the deflections have two separate elbows (15, 19) made of plastic.

2. Motor part according to claim 1, with deflections (18) having at least one receiving section (25, 26) for an end (11) of a cooling pipe.

3. Motor part according to claim 1 or 2, with deflections having at least one plug-in section (27, 28) for insertion into an end (14) of a cooling pipe (10).

4. Motor part according to claim 1 to 3, with the elbows (15, 19) being connected together by means of a coupling section (17).

5. Motor part according to claim 4, with one of the elbows (19) being configured as a single part with a coupling section (17) .

6. Motor part according to one of claims 4 or 5, with the coupling section (17) being configured as a pipe.

7. Motor part according to one of claims 1 to 6, **characterised in that** the elbow is configured as a moulded plastic part.

8. Linear or rotary motor with a motor part according to one of the preceding claims.

## Revendications

1. Partie d'un moteur électrique, notamment partie primaire, comprenant une pièce (1) qui porte des éléments efficaces pour le fonctionnement du moteur, notamment des bobines, ainsi qu'au moins un serpentin (K) de refroidissement pour l'évacuation de chaleur, le serpentin (K) de refroidissement étant fixé à la pièce (1) et étant constitué de façon sinueuse de tubes (10) droits de refroidissement et de coudages (18), **caractérisée en ce que** les coudages comportent deux coudes (15, 19) distincts en matière plastique.

2. Partie de moteur suivant la revendication 1 ayant des coudages (18), qui comportent au moins un tronçon (25, 26) de réception d'une extrémité (11) d'un tube de refroidissement.

3. Partie de moteur suivant la revendication 1 ou 2 ayant des coudages, qui comportent au moins un tronçon (27, 28) d'emmanchement dans une extrémité (14) d'un tube (10) de refroidissement.

4. Partie d'un moteur suivant la revendication 1 à 3, dans laquelle les coudes (15, 19) sont reliés entre eux par un tronçon (17) d'accouplement.

5. Partie de moteur suivant la revendication 4, dans laquelle l'un des coudes (19) est d'un seul tenant avec un tronçon (17) d'accouplement.

6. Partie de moteur suivant l'une des revendications 4 ou 5, dans laquelle le tronçon (17) d'accouplement est constitué sous la forme d'un tube.

7. Partie de moteur suivant l'une des revendications 1 à 6, **caractérisée en ce que** les coudes sont constitués de pièces moulées en matière plastique.

8. Moteur linéaire ou rotatif ayant une partie de moteur suivant l'une des revendications précédentes.
